# EUROPEAN PATENT APPLICATION

(11) **EP 3 070 183 A1**
(43) Date of publication of application: **21.09.2016**
(21) Application number: 16160884.9
(22) Date of filing: 17.03.2016
(51) Int. Cl.: C22C 14/00, C22F 1/18

(54) **HEAT TREATMENT OF TITANIUM ALLOY**

(30) Priority: 18.03.2015 US 201514661315
(71) Applicant: Goodrich Corporation, Charlotte, NC 28217-4578 (US)
(72) Inventor: PANZA-GIOSA, Roque, Oakville, Ontario L6L 5Y7 (CA)
(74) Representative: Bridge, Kerry Ann

(57) **Abstract**

The present disclosure describes methods 200, 300 for forming metal components, including aircraft landing gear components, from high strength and suitably high ductility titanium alloys, including an improved Ti-5553 alloy.

## Description

### FIELD

The present disclosure relates generally to heat treating beta titanium alloys and, more specifically, to forming components of landing gear assemblies from heat treated beta Ti-5553, Ti-5553-1, and derivative alloys.

### BACKGROUND

Metal components such as aircraft landing gear are typically made of steel (for example, 300M low alloy steel, such as SAE AMS6417 specification) or titanium alloys (for example, Ti-10-2-3, such as SAE AMS4983 specification). Aircraft landing gear components benefit from materials that exhibit high static strength and low density. However, improving the tensile properties of certain titanium alloys can decrease ductility, making the alloys unsuitable for use in aircraft landing gear components.

### SUMMARY

A method for forming a titanium component of the present disclosure may comprise forming a metal component into a final configuration using a titanium alloy comprising beta-Ti-5553, solutionizing the metal component between about 30°C and 60°C less than a beta transus temperature of the titanium alloy for between about 1 hour and 2 hours to form a solutionized metal component, and aging the solutionized metal component between about 575°C and about 625°C for between about 2 hours and about 4 hours to form a heat treated metal component. The method may further comprise a step of finishing the heat treated metal component. The heat treated metal component may comprise between about 15 percent and about 20 percent of primary alpha phase particles by volume. The heat treated metal component may comprise a plurality of fine scale alpha phase particles having a lenticular configuration with an average diameter of between about 0.1 microns and about 0.3 microns and an average length of between about 1 micron and about 3 microns. The heat treated metal component may comprise a ductility of at least about 4% elongation in any grain direction, a yield tensile strength of at least about 1.17x10⁶ kPa, and/or an ultimate tensile strength of at least about 1.24x10⁶ kPa. The heat treated metal component may comprise a landing gear component such as, for example, an upper torque link or a lower torque link.

A method for treating a titanium alloy of the present disclosure may comprise solutionizing a Ti-5553 alloy between about 30°C and 60°C less than a beta transus temperature of the alloy for between about 1 hour and 2 hours, and aging the Ti-5553 alloy between about 575°C and about 625°C for between about 2 hours and 4 hours to form a heat treated Ti-5553 alloy. The heat treated Ti-5553 alloy may comprise between about 15 percent and about 20 percent of primary alpha phase particles by volume. The heat treated metal component may comprise a plurality of fine scale alpha phase particles having a lenticular configuration with an average diameter of between about 0.1 microns and about 0.3 microns and an average length of between about 1 micron and about 3 microns. The heat treated Ti-5553 alloy may comprise a ductility of at least about 4% elongation in any grain direction, a yield tensile strength of at least about 1.17x10⁶ kPa, and/or an ultimate tensile strength of at least about 1.24x10⁶ kPa in any grain direction.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
Figure 1 illustrates a side view of a landing gear assembly in accordance with various embodiments;
Figure 2 illustrates a method of heat treating a beta titanium alloy in accordance with various embodiments;
Figure 3 illustrates a method of forming a landing gear component from a beta titanium alloy in accordance with various embodiments;
Figures 4A and 4B illustrate scanning electron micrograph images of a beta titanium alloy after solutionizing in accordance with various embodiments; and
Figures 5A and 5B illustrate scanning electron micrograph images of a heat treated beta titanium alloy in accordance with various embodiments.

### DETAILED DESCRIPTION

The detailed description of exemplary embodiments herein makes reference to the accompanying drawings, which show exemplary embodiments by way of illustration and their best mode. While these exemplary embodiments are described in sufficient detail to enable those skilled in the art to practice the inventions, it should be understood that other embodiments may be realized and that logical and mechanical changes may be made without departing from the spirit and scope of the inventions. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option.

The present disclosure describes methods for improving the properties of a beta titanium alloy, such as Ti-5553 and its derivatives, to make the alloy suitable for use in manufacturing components, such as, for example, components of landing gear assemblies. The disclosed methods may increase strength of the beta titanium alloy while also improving the ductility of the alloy to achieve a peak in both properties.

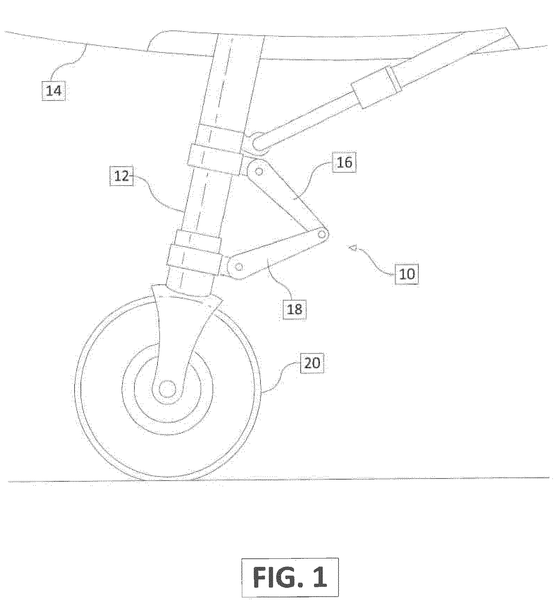

With initial reference to Figure 1, a landing gear assembly 10 of an aircraft 14 is illustrated. In various embodiments, landing gear assembly 10 comprises a piston 12. Landing gear assembly 10 may further comprise a wheel 20 coupled to piston 12. In various embodiments, landing gear assembly 10 comprises an upper torque link 16 and a lower torque link 18 coupled to piston 12. Further, upper torque link 16 may be coupled to lower torque link 18. Although described with specific reference to particular components, landing gear assembly 10 is illustrated as an example of an aircraft landing gear assembly, and the present disclosure is not limited to landing gear assembly 10 of Figure 1.

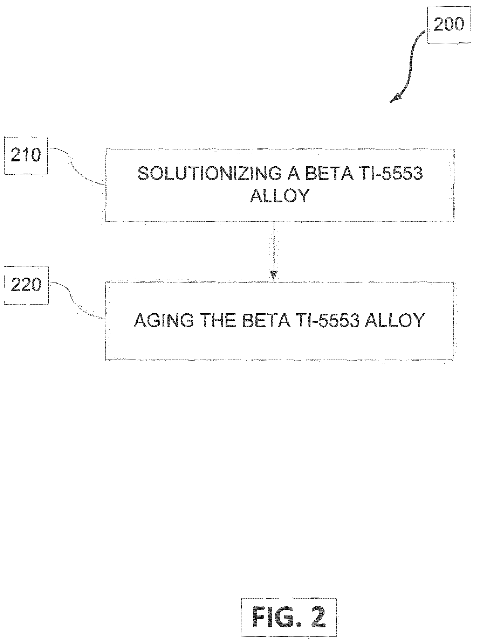

With reference to Figure 2, a method 200 for heat treating a beta titanium alloy in accordance with various embodiments is illustrated. A beta titanium alloy comprises a body centered cubic form of titanium. In various embodiments, a beta titanium alloy such as Ti-5Al-5V-5Mo-3Cr (also known as Ti-5553 alloy, and has similar alloys with slight differences in composition and sold under the tradename "Timetal 18" by Timet, Toronto, Ohio and Ti-55553-1 (1% Zr) sold by VSMPO, Salda, Russia), is subjected to method 200 to render it suitable for use in manufacturing metal components such as, for example, the various components of landing gear assembly 10.

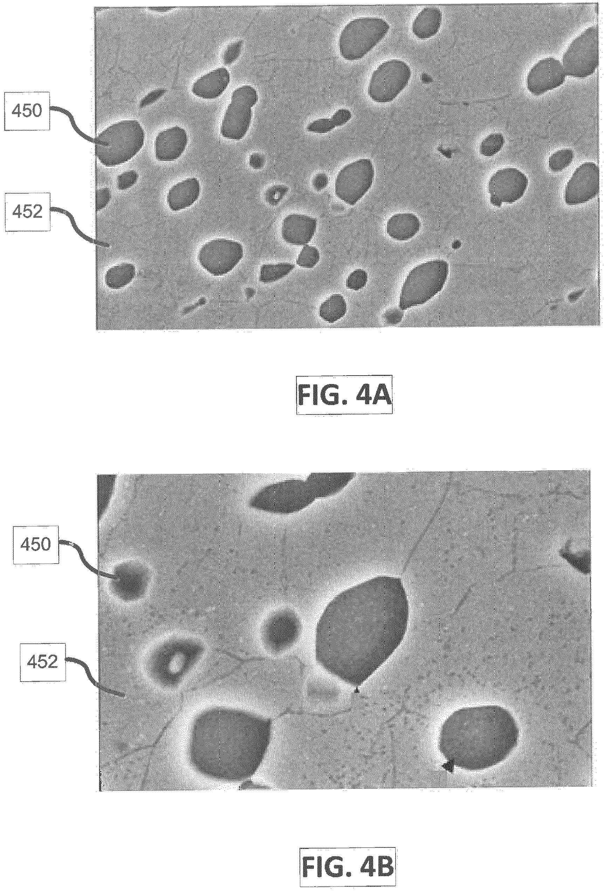

In various embodiments, method 200 comprises a step 210 of solutionizing a beta titanium alloy. In various embodiments, step 210 comprises solutionizing the Ti-5553 alloy by heating the alloy in, for example, a furnace, at between about 30°C and 60°C degrees less than the beta transus temperature of the Ti-5553 alloy for between about 1 hour and 2 hours to form a solutionized Ti-5553 alloy. For example, the beta transus temperature of a Ti-5553 alloy such as Ti-5553-1 may be about 860°C. Solutionizing may, for example, allow primary alpha phase particles (hexagonal close-packed chrystal structure which are globular in shape) to form within the retained beta metrix in the Ti-5553 alloy. With reference to Figures 4A and 4B, primary alpha phase particles 450 are interspersed within a matrix of beta phase 452 in accordance with various embodiments. Further, after step 210, the solutionized alloy may comprise a microstructure having between about 15 percent and about 20 percent by volume of primary alpha particles in the matrix of retained beta. In various embodiments, primary alpha phase particles may comprise an average diameter of between about 2 microns and about 5 microns.

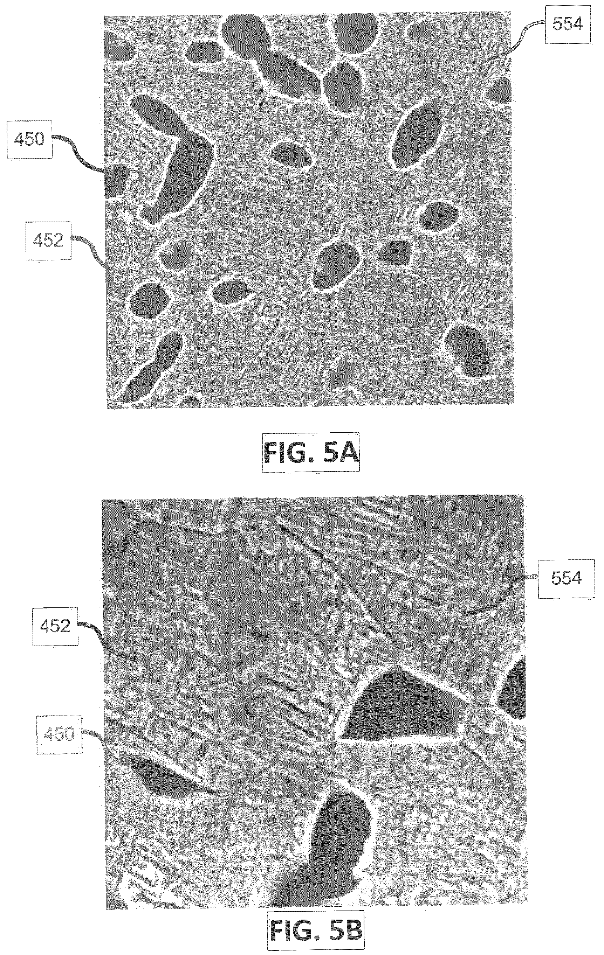

In various embodiments, method 200 further comprises a step 220 of aging the solutionized Ti-5553 alloy. For example, the aging step 220 may comprise heating the solutionized Ti-5553 alloy between about 575°C and about 625°C for between about 2 hours and 4 hours. In various embodiments, step 220 forms fine scale alpha particles within the beta phase. With reference to Figures 5A and 5B, after step 220, the solutionized alloy Ti-5553 may comprise primary alpha phase particles 450 and fine scale alpha particles 554 dispersed in a matrix of beta phase 452. In various embodiments, fine scale alpha phase particles 554 may have a lenticular configuration. Fine scale alpha phase particles 554 may, for example, have an average diameter of between about 0.1 microns and 0.3 microns. Fine scale alpha phase particles 554 may also have an average length of between about 1 microns and 3 microns.

Step 220 may, for example, increase the ductility of the solutionized Ti-5553 alloy to at least about 4% elongation in any grain direction. Step 220 may also increase the yield tensile strength of the solutionized Ti-5553 alloy to at least about 170 ksi (1.17x10⁶ kPa). Further, the ultimate tensile strength may be increased to at least about 180 ksi (1.24x10⁶ kPa) in any grain direction.

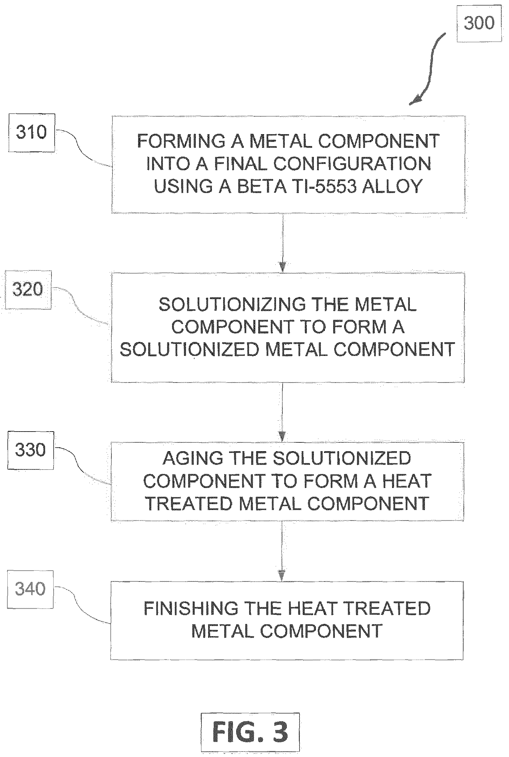

With reference to Figure 3, a method 300 for forming a metal component in accordance with various embodiments is illustrated. For example, any suitable component of a landing gear assembly, such as landing gear assembly 10, may be formed by method 300. In various embodiments, method 300 comprises a step 310 of forming a metal component into a final configuration using a beta Ti-5553 alloy. Step 310 may comprise forging, machining, casting, or otherwise forming a component of landing gear assembly 10 into a final configuration. The term "final configuration" is defined to mean the shape, size, and configuration of a part as it is intended to be used in the landing gear assembly. Typically, landing gear components cast from titanium alloys are forged or cast into an intermediate configuration, rough machined, heat treated, and then machined to a final configuration. Method 300 may, for example, eliminate the need for an intermediate configuration and rough machining, as the method improves the properties of the beta Ti-5553 alloy such that the component can be heat treated in its final configuration.

In various embodiments, method 300 further comprises a step 320 of solubilizing the beta Ti-5553 alloy. Similar to step 210 of method 200, in various embodiments, step 320 comprises solutionizing the metal component between about 30°C and 60°C less than the beta transus temperature of the alloy for between about 1 hour and 2 hours to form a solutionized metal component having a duplex microstructure of primary alpha particles in a matrix of retained beta. In various embodiments, step 320 allows formation primary alpha phase particles within the beta Ti-5553 alloy of the metal component. After step 320, the solutionized metal component may comprise between about 15 volume percent and about 20 volume percent of primary alpha phase particles. In various embodiments, the volume fraction of primary alpha particles permits plastic deformation of the solutionized metal component and further, may retard the onset of fracture within the solutionized metal component.

Method 300 may further comprise a step 330 of aging the solutionized metal component. For example, the aging step may comprise heating the solutionized metal component between about 575°C and about 625°C for between about 2 hours and 4 hours to form an aged metal component. With reference to Figures 5A and 5B, in various embodiments, a portion of the beta phase of the solutionized metal component may be transformed into a plurality of fine scale alpha phase particles 554. Fine scale alpha phase particles 554 may have a lenticular configuration. Further, fine scale alpha phase particles 554 may have an average diameter of between about 0.1 microns and 0.3 microns. Fine scale alpha phase particles 554 may also have an average length of between about 1 micron and 3 microns. In various embodiments, fine scale alpha phase particles 554 increase the tensile strength of the aged metal component, which is determined by the scale, shape, and distribution of primary alpha particles 554.

Step 330 may, for example, increase the ductility of the precipitation hardened metal component to at least about 4% elongation in any grain direction, increase the yield tensile strength to at least about 170 ksi (1.17x10⁶ kPa), and/or increase the ultimate tensile strength to at least about 180 ksi (1.24x10⁶ kPa) in any grain direction.

Method 340 may further include an optional step 340 of finishing the metal component. For example, step 340 may comprise polishing, deburring, and other methods of finishing used to finish the metal component for use in a landing gear assembly.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f), unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method (200, 300) for forming a titanium component comprising:
forming (310) a metal component into a final configuration using a titanium alloy comprising Ti-5553;
solutionizing (210, 320) the metal component between about 30°C and 60°C less than a beta transus temperature of the titanium alloy for between about 1 hour and 2 hours to form a solutionized metal component; and
aging (220, 330) the solutionized metal component between about 575°C and wherein about 625°C for between about 2 hours and about 4 hours to form a heat treated metal component.

2. The method of claim 1, further comprising a step of finishing (340) the heat treated metal component.

3. The method of claim 1 or 2, wherein the solutionized metal component comprises between about 15 percent and about 20 percent of primary alpha phase particles by volume.

4. The method of any preceding claim, wherein the heat treated metal component comprises a plurality of fine scale alpha phase particles having a lenticular configuration with an average diameter of between about 0.1 microns and about 0.3 microns and an average length of between about 1 micron and about 3 microns.

5. The method of any preceding claim, wherein the heat treated metal component comprises a ductility of at least about 4% elongation in any grain direction.

6. The method of any preceding claim, wherein the heat treated metal component comprises a yield tensile strength of at least about 1.17x10⁶ kPa in any grain direction.

7. The method of any preceding claim, wherein the heat treated metal component comprises an ultimate tensile strength of at least about 1.24x10⁶ kPa in any grain direction.

8. The method of any preceding claim, wherein the heat treated metal component comprises a landing gear component.

9. The method of claim 8, wherein the heat treated metal component comprises one of a piston, an upper torque link, and a lower torque link.

10. A method (200, 300) comprising:
Solutionizing (210, 320) a Ti-5553 alloy between component between about 30°C and 60°C less than a beta transus temperature of the Ti-5553 alloy for between about 1 hour and 2 hours; and
aging the Ti-5553 alloy between about 575°C and about 625°C for between about 2 hours and 4 hours to form a heat treated Ti-5553 alloy.

11. The method of claim 10, wherein after solutionizing (210, 320), the Ti-5553 alloy comprises between about 15 volume percent and about 20 volume percent of primary alpha phase particles.

12. The method of claim 10 or 11, wherein after aging (220, 330), the Ti-5553 alloy comprises a plurality of fine scale alpha phase particles having a lenticular configuration with an average diameter of between about 0.1 micron and 0.3 microns and an average length of between about 1 and 3 microns.

13. The method of any of claims 10 to 12, wherein aging (220, 330), the heat treated Ti-5553 alloy comprises a ductility of at least about 4% elongation in any grain direction.

14. The method of any of claims 10 to 13, wherein after aging (220, 330), the heat treated Ti-5553 alloy comprises a yield tensile strength of at least about 1.17x10⁶ kPa in any grain direction.

15. The method of any of claims 10 to 14, wherein after aging (220, 330), the heat treated Ti-5553 alloy comprises an ultimate tensile strength of at least about 1.24x10⁶ kPa in any grain direction.
